# EUROPEAN PATENT APPLICATION

(11) **EP 4 583 039 A1**
(43) Date of publication of application: **09.07.2025**
(21) Application number: 24863994.0
(22) Date of filing: 26.02.2024
(51) Int. Cl.: G06T 1/60

(54) **IMAGE PROCESSING METHOD AND APPARATUS, DEVICE, AND MEDIUM**

(30) Priority: 11.09.2023 CN 202311170382
(71) Applicant: KunlunXin Technology (Beijing) Company Limited, Haidian District Beijing 100101 (CN)
(72) Inventor: ZHUANG, Haoqi, Beijing 100101 (CN); SHI, Jiaxin, Beijing 100101 (CN); XIE, Xiating, Beijing 100101 (CN)
(74) Representative: Isarpatent
(86) International application number: PCT/CN2024/078596
(87) International publication number: WO 2025/055266

(57) **Abstract**

The present disclosure provides an image processing method and apparatus, a device and medium, relates to the field of computer technology, and in particular to the field of chip technology, artificial intelligence technology and image processing technology. The implementation is:reading a plurality of images arranged in a predetermined order from a first memory, and writing them to a second memory capable of being read and written by the processing unit; reading the plurality of images from the second memory using the processing unit; determining a plurality of first feature data corresponding to the plurality of images, respectively; determining, for each first feature data, filler data based on the data volume of the first feature data and the predetermined data volume; and splicing the first feature data and the filler data to obtain second feature data having the predetermined data volume; sequentially writing, in the predetermined order, the plurality of second feature data to the second memory; and transferring the second feature data stored in the second memory to the first memory in response to determining that the data volume of the second feature data stored in the second memory reaches a predetermined threshold.

## Description

### CROSS-REFERENCE TO RELATED APPLICATIONS

The present application claims priority to Chinese Patent Application No. 202311170382.8 filed on September 11, 2023, which is incorporated herein by reference in its entirety.

### TECHNICAL FIELD

The present disclosure relates to the field of computer technology, and in particular to the field of chip technology, artificial intelligence technology and image processing technology, and specifically relates to an image processing method, an apparatus, an electronic device, a computer-readable storage medium and a computer program product.

### BACKGROUND

Artificial intelligence is the discipline of studying the making of computers to simulate certain thinking processes and intelligent behaviors of a human being (such as learning, reasoning, thinking, planning, etc.), and there are both hardware-level and software-level technologies. The artificial intelligence hardware technologies generally include technologies such as sensors, special artificial intelligence chips, cloud computing, distributed storage, big data processing, etc.;The artificial intelligence software technologies mainly include computer vision technology, speech recognition technology, natural language processing technology, machine learning/deep learning, big data processing technology, knowledge diagram technology and other major technological directions.

With the development of artificial intelligence technology, more and more applications have achieved results far beyond traditional algorithms based on artificial intelligence technology. Deep learning is a data-intensive algorithm and a computation-intensive algorithm, and in order to improve the efficiency of image processing based on artificial intelligence technology, it is necessary to reasonably utilize hardware resources of image processing devices and reduce the processing delay.

The methods described in this section are not necessarily methods that have been previously conceived or employed. Unless otherwise indicated, it should not be assumed that any method described in this section is considered to be the prior art only due to its inclusion in this section. Similarly, the problems mentioned in this section should not be assumed to be recognized in any prior art unless otherwise indicated.

### SUMMARY

The present disclosure provides an image processing method, an apparatus, a chip, an electronic device, a computer readable storage medium, and a computer program product.

According to one aspect of the present disclosure, there is provided an image processing method performed by an image processing apparatus, the image processing apparatus comprises a processing unit, and the method comprises: reading a plurality of images arranged in a predetermined order from a first memory, and writing them to a second memory capable of being read and written by the processing unit; reading the plurality of images from the second memory using the processing unit; determining a plurality of first feature data corresponding to the plurality of images, respectively; performing, for each of the plurality of first feature data, a first processing to obtain second feature data having a predetermined data volume, and the first processing comprises: determining, based on the data volume of the first feature data and the predetermined data volume, a first quantity to obtain filler data consisting of the first quantity of filler elements; and splicing the first feature data and the filler data to obtain the second feature data; sequentially writing, in the predetermined order, the plurality of second feature data corresponding to the plurality of first feature data to the second memory; and transferring the second feature data stored in the second memory to the first memory in response to determining that the data volume of the second feature data stored in the second memory reaches a predetermined threshold.

According to one aspect of the present disclosure, there is provided an image processing apparatus, comprising: a processing unit; a writing unit, configured to read a plurality of images arranged in a predetermined order from a first memory, and write them to a second memory capable of being read and written by the processing unit, wherein the processing unit comprises: a reading unit, configured to read the plurality of images from the second memory; a first determination unit, configured to determine a plurality of first feature data corresponding to the plurality of images respectively; a processing subunit, configured to perform, for each of the plurality of first feature data, a first processing to obtain second feature data having a predetermined data volume, and the first processing comprises: determining, based on the data volume of the first feature data and the predetermined data volume, a first quantity to obtain filler data consisting of the first quantity of filler elements; and splicing the first feature data and the filler data to obtain the second feature data; a first writing subunit, configured to sequentially write, in the predetermined order, the plurality of second feature data corresponding to the plurality of first feature data to the second memory; and a transfer unit, configured to transfer the second feature data stored in the second memory to the first memory in response to determining that the data volume of the second feature data stored in the second memory reaches a predetermined threshold.

According to one aspect of the present disclosure, there is provided a chip, comprising an image processing apparatus as described above.

According to one aspect of the present disclosure, there is provided an electronic device, comprising: at least one processor; and a memory communicatively connected to the at least one processor; wherein the memory stores instructions executable by the at least one processor, and the instructions are executed by the at least one processor to enable the at least one processor to perform the above image processing method.

According to one aspect of the present disclosure, there is provided a non-transient computer-readable storage medium storing computer instructions, wherein the computer instructions are used to enable the computer to perform the above image processing method.

According to one aspect of the present disclosure, there is provided a computer program product, including a computer program, wherein the computer program implements the above image processing method when executed by a processor.

According to one or more embodiments of the present disclosure, the image processing efficiency can be improved.

It should be understood that the content described in this section is not intended to identify key or important features of the embodiments of the present disclosure, nor is it intended to limit the scope of the present disclosure. Other features of the present disclosure will become readily understood from the following description.

### BRIEF DESCRIPTION OF THE DRAWINGS

The drawings exemplarily illustrate embodiments and constitute a part of the specification, and are used in conjunction with the textual description of the specification to explain the example implementations of the embodiments. The illustrated embodiments are for illustrative purposes only and do not limit the scope of the claims. Throughout the drawings, like reference numerals refer to similar but not necessarily identical elements.
FIG. 1 illustrates a schematic diagram of an example system in which various methods described herein may be implemented according to exemplary embodiments of the present disclosure.
FIG. 2 illustrates a flowchart of an image processing method according to exemplary embodiments of the present disclosure;
FIG. 3A-FIG. 3B illustrate a schematic diagram of an image processing process according to exemplary embodiments of the present disclosure;
FIG. 4 illustrates a structural block diagram of an image processing apparatus according to exemplary embodiments of the present disclosure;
FIG. 5 illustrates a structural block diagram of an example electronic device that can be used to implement embodiments of the present disclosure.

### EMBODIMENTS

The exemplary embodiments of the present disclosure are described below in conjunction with the accompanying drawings, including various details of the embodiments of the present disclosure to facilitate understanding, and they should be considered as example only. Therefore, one of ordinary skill in the art will recognize that various changes and modifications may be made to the embodiments described herein without departing from the scope of the present disclosure. Similarly, descriptions of well-known functions and structures are omitted in the following description for the purpose of clarity and conciseness.

In the present disclosure, unless otherwise specified, the terms "first", "second" and the like are used to describe various elements and are not intended to limit the positional relationship, timing relationship, or importance relationship of these elements, and such terms are only used to distinguish one element from another. In some examples, the first element and the second element may refer to the same instance of the element, while in some cases they may also refer to different instances based on the description of the context.

The terminology used in the description of the various examples in this disclosure is for the purpose of describing particular examples only and is not intended to be limiting. Unless the context clearly indicates otherwise, if the number of elements is not specifically defined, the element may be one or more. In addition, the terms "and/or" used in the present disclosure encompass any one of the listed items and all possible combinations thereof.

In related art, when it is necessary to use a processing unit to extract feature data of a plurality of images, the plurality of images need to be transferred from a first memory that stores original images to a second memory that can directly interact with the processing unit, and after each computation of the feature data of one image, the image needs to be written back to the first memory, which leads to fragmented write requests and causing interruption latency of data read and write.

Based on this, the present disclosure provides an image processing method that, when extracting feature data of a plurality of images using a processing unit, converts first feature data of each image into second feature data having a predetermined data volume, achieves length alignment of the feature data, and then temporarily stores the plurality of feature data in a second memory, and then uniformly writes the temporarily stored data back to the first memory when the temporarily stored data reaches a certain length, which effectively reduces data writing operations and improves the image processing efficiency, and can correctly split the temporarily stored feature data based on the predetermined data volume, thereby preventing the temporary storage operation from affecting the correctness of image processing.

Embodiments of the present disclosure will be described in detail below with reference to the accompanying drawings.

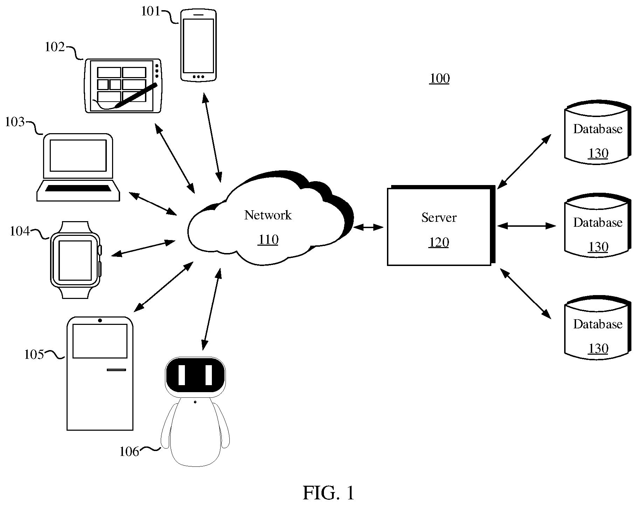

FIG. 1 illustrates a schematic diagram of an example system 100 in which various methods and apparatuses described herein may be implemented in accordance with embodiments of the present disclosure. Referring to FIG. 1, the system 100 includes one or more client devices 101, 102, 103, 104, 105 and 106, a server 120, and one or more communication networks 110 that couple one or more client devices to the server 120. The client devices 101, 102, 103, 104, 105, and 106 may be configured to execute one or more applications.

In embodiments of the present disclosure, the server 120 may run one or more services or software applications that enable execution of an image processing method.

In some embodiments, the server 120 may also provide other services or software applications, which may include non-virtual environments and virtual environments. In some embodiments, these services may be provided as web-based services or cloud services, such as to the user of the client devices 101, 102, 103, 104, 105, and/or 106 under a Software as a Service (SaaS) model.

In the configuration shown in FIG. 1, the server 120 may include one or more components that implement functions performed by the server 120. These components may include software components, hardware components, or a combination thereof that are executable by one or more processors. A user operating the client devices 101, 102, 103, 104, 105, and/or 106 may sequentially utilize one or more client applications to interact with the server 120 to utilize the services provided by these components. It should be understood that a variety of different system configurations are possible, which may be different from the system 100. Therefore, FIG. 1 is an example of a system for implementing the various methods described herein and is not intended to be limiting.

The user may use the client devices 101, 102, 103, 104, 105, and/or 106 to send images to be edited. The client devices may provide an interface that enables the user of the client devices to interact with the client devices. The client devices may also output information to the user via the interface. Although FIG. 1 depicts only six client devices, those skilled in the art will be able to understand that the present disclosure may support any number of client devices.

The client devices 101, 102, 103, 104, 105, and/or 106 may include various types of computer devices, such as portable handheld devices, general-purpose computers, such as personal computers and laptop computers, workstation computers, wearable devices, smart screen devices, self-service terminal devices, service robots, gaming systems, thin clients, various messaging devices, sensors, or other sensing devices, and the like. These computer devices may run various types and versions of software applications and operating systems, such as Microsoft Windows, Apple iOS, Unix-like operating systems, Linux or Linux-like operating systems (e.g., Google Chrome OS); or include various mobile operating systems, such as Microsoft Windows Mobile OS, iOS, Windows Phone, Android. The portable handhold devices may include cellular telephones, smart phones, tablet computers, personal digital assistants (PDA), and the like. The wearable devices may include head-mounted displays, such as smart glasses, and other devices. The gaming systems may include various handhold gaming devices, Internet-enabled gaming devices, and the like. The client devices can perform various different applications, such as various applications related to the Internet, communication applications (e.g., e-mail applications), Short Message Service (SMS) applications, and may use various communication protocols.

The network 110 may be any type of network well known to those skilled in the art, which may support data communication using any of a variety of available protocols (including but not limited to TCP/IP, SNA, IPX, etc.). By way of example only, one or more networks 110 may be a local area network (LAN), an Ethernet-based network, a token ring, a wide area network (WAN), an Internet, a virtual network, a virtual private network (VPN), an intranet, an external network, a blockchain network, a public switched telephone network (PSTN), an infrared network, a wireless network (for example, Bluetooth, WiFi), and/or any combination of these and/or other networks.

The server 120 may include one or more general-purpose computers, a dedicated server computer (e.g., a PC (personal computer) server, a UNIX server, a mid-end server), a blade server, a mainframe computer, a server cluster, or any other suitable arrangement and/or combination. The server 120 may include one or more virtual machines running a virtual operating system, or other computing architectures involving virtualization (e.g., one or more flexible pools of a logical storage device that may be virtualized to maintain virtual storage devices of a server). In various embodiments, the server 120 may run one or more services or software applications that provide the functions described below.

The computing unit in the server 120 may run one or more operating systems including any of the operating systems described above and any commercially available server operating system. The server 120 may also run any of a variety of additional server applications and/or intermediate layer applications, including a HTTP server, an FTP server, a CGI server, a Java server, a database server, etc.

In some implementations, the server 120 may include one or more applications to analyze and merge data feeds and/or event updates received from the user of the client devices 101, 102, 103, 104, 105, and/or 106. The server 130 may also include one or more applications to display the data feeds and/or the real-time events via one or more display devices of the client devices 101, 102, 103, 104, 105, and/or 106.

In some embodiments, the server 120 may be a server of a distributed system, or a server incorporating a block chain. The server 120 may also be a cloud server, or an intelligent cloud computing server or an intelligent cloud host with an artificial intelligence technology. The cloud server is a host product in a cloud computing service system to overcome the defects of management difficulty and weak service expandability exiting in a traditional physical host and virtual private server (VPS) service.

The system 100 may also include one or more databases 130. In certain embodiments, these databases may be used to store data and other information. For example, one or more of the databases 130 may be used to store information such as audio files and video files. The databases 130 may reside in various locations. For example, the database used by the server 120 may be local to the server 120, or may be remote from the server 120 and may communicate with the server 120 via a network-based or dedicated connection. The databases 130 may be of different types. In some embodiments, the database used by the server 120 may be, for example, a relational database. One or more of these databases may store, update, and retrieve data to and from the database in response to a command.

In some embodiments, one or more of the databases 130 may also be used by an application to store application data. The databases used by the application may be different types of databases, such as a key-value repository, an object repository, or a conventional repository supported by a file system.

The system 100 of FIG. 1 may be configured and operated in various ways to enable application of various methods and apparatuses described according to the present disclosure.

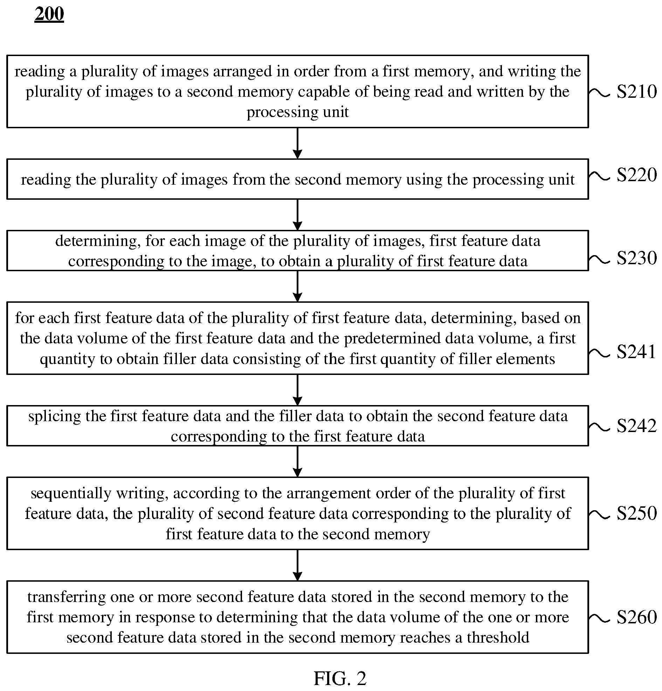

FIG. 2 illustrates a flowchart of an image processing method 200 performed by an image processing apparatus according to exemplary embodiments of the present disclosure, and the image processing apparatus comprises a processing unit. As shown in FIG. 2, the method 200 comprises:
step S210, reading a plurality of images arranged in a predetermined order from a first memory, and writing them to a second memory capable of being read and written by the processing unit;
step S220, reading the plurality of images from the second memory using the processing unit;
step S230, determining a plurality of first feature data corresponding to the plurality of images, respectively;
step S240, performing, for each of the plurality of first feature data, a first processing to obtain second feature data having a predetermined data volume,
wherein, the first processing comprises:
   step S241, determining, based on the data volume of the first feature data and the predetermined data volume, a first quantity to obtain filler data consisting of the first quantity of filler elements; and
   step S242, splicing the first feature data and the filler data to obtain the second feature data;
   step S250, sequentially writing, in the predetermined order, the plurality of second feature data corresponding to the plurality of first feature data to the second memory; and
   step S261, transferring the second feature data stored in the second memory to the first memory in response to determining that the data volume of the second feature data stored in the second memory reaches a predetermined threshold.

By applying the method 200 described above, when extracting the feature data of the plurality of images using the processing unit, the length of the second feature data is aligned by performing a conversion operation for the feature data, so that the second feature data with the uniform predetermined data volume can be temporarily stored in the second memory and then be uniformly written back to the first memory when the stored data reaches a certain length, thereby effectively reducing the data writing operations and lowering the latency of image processing to improve efficiency.

In some examples, the first memory may be a main memory with a large capacity, and the second memory may be a cache capable of directly interacting with the processing unit. By combining the utilization of the first memory, which has a low read/write speed and a large capacity, and the second memory, which has a high read/write speed and a small capacity, it is possible to utilize hardware resources more reasonably to improve the image processing efficiency.

In some examples, the processing unit in an image processing apparatus may be a graphics processing unit (GPU), a central processing unit (CPU), or a logic device such as various types of computing chips, computing arrays, and the like, which is not limited in the present disclosure.

In some examples, the predetermined threshold may be manually pre-configured on demand, for example, may be set based on the maximum storage capacity of the second memory or based on the transmission bandwidth of the data transmission link between the first memory and the second memory.

In some examples, the predetermined threshold of the data volume of the second feature data may be in units of images, and may for example refer to the feature data of N images, that is, corresponding to N times of the predetermined data volume.

In some examples, the second feature data may consist of unit feature data having a predetermined size, in which case the predetermined threshold may be in units of unit feature data, that is, the feature data of a single image can be split into different batches for transferring. By further refining the granularity of data alignment and transfer, the processing efficiency can be improved.

According to some embodiments, the method 200 further comprises: determining the target feature data from the plurality of second feature data based on the predetermined data volume in response to determining that a second processing is to be performed for the target feature data of the plurality of second feature data; and performing the second processing based on the target feature data. As a result, it is possible to split, in the case of uniformly temporarily storing and transferring the plurality of second feature data, the spliced and transferred second feature data based on the predetermined data volume to obtain the correct target feature data, which ensures the correctness of the image processing while improving the efficiency.

According to some embodiments, each element in the first feature data is in a first data format, the filler element is in a second data format, the bit width of the second data format is less than the bit width of the first data format, and wherein the first processing for each first feature data further comprises: for each element in the first feature data, converting the element into a converted element with the second data format to obtain third feature data, wherein the splicing the first feature data and the filler data to obtain the second feature data comprises: splicing the third feature data and the filler data to obtain the second feature data. As a result, it is possible to further compress the first feature data and convert it into data with smaller bit width to improve the image processing efficiency. Understandably, in the case where the storage capacity of the second memory remains unchanged, it is possible to temporarily store, by aligning, splicing and temporarily storing the compressed feature data, more sets of feature data in the second memory to further reduce the number of write operations and to enhance the image processing efficiency.

In some examples, the third feature data may be bit data, that is, the feature map is converted into a bit map to achieve compression of data volume.

According to some embodiments of the present disclosure, the first memory comprises a first subunit and a second subunit, the first subunit stores the plurality of images, and the reading the plurality of images arranged in the predetermined order from the first memory to write them to the second memory comprises: determining a plurality of sub-image data based on the plurality of images, and the plurality of sub-image data comprises first sub-image data and second sub-image data; writing the first sub-image data to the second subunit to enable the first sub-image data to be read from the second subunit; and writing the second sub-image data to the second subunit in response to determining that the first sub-image data has been read, and wherein the transferring the second feature data stored in the second memory to the first memory in response to determining that the data volume of the second feature data stored in the second memory has reached a predetermined threshold comprises: transferring the second feature data stored in the second memory to the second subunit in response to determining that the data volume of the second feature data stored in the second memory has reached the predetermined threshold, and in response to determining that the second processing is to be performed based on the second feature data stored in the second memory.

As a result, the first memory can be set up as a multi-level storage system, for example, may comprise a first subunit and a second subunit. In this case, the image data to be processed needs to undergo a level-by-level transfer through the first subunit →the second subunit → the second memory, and when it is determined that another processing needs to be performed on the second feature data, the second feature data can be temporarily stored in the second subunit which is closer to the second memory, so as to reduce the latency of data transfer and to further improve the image processing efficiency.

According to some embodiments, the transferring the second feature data stored in the second memory to the second subunit comprises: transferring the second feature data stored in the second memory to the target storage location in response to determining that a target storage location exists in the second subunit, wherein the target storage location does not comprise the sub-image data that has not been read. As a result, it is possible to utilize the target storage location to temporarily store the second feature data while ensuring that the data in the target storage location has been read, thereby avoiding data loss and to ensuring the correctness of the image processing.

According to some embodiments, each of the plurality of images comprises a first image channel and a second image channel, and each of the plurality of feature data comprises first sub-feature data corresponding to the first image channel and second sub-feature data corresponding to the second image channel, and wherein the determining the plurality of sub-image data based on the plurality of images comprises: determining the first sub-image data based on the first image channel of each of the plurality of images; and determining the second sub-image data based on the second image channel of each of the plurality of images.

According to embodiments of the present disclosure, when the extraction of the first feature data is in units of image channels, the image data is divided according to channel dimensions, which is equivalent to performing the operation of extracting channels between the first subunit and the second subunit without the need for the processing unit to read the channel data in a leap-wise manner, so as to improve processing efficiency.

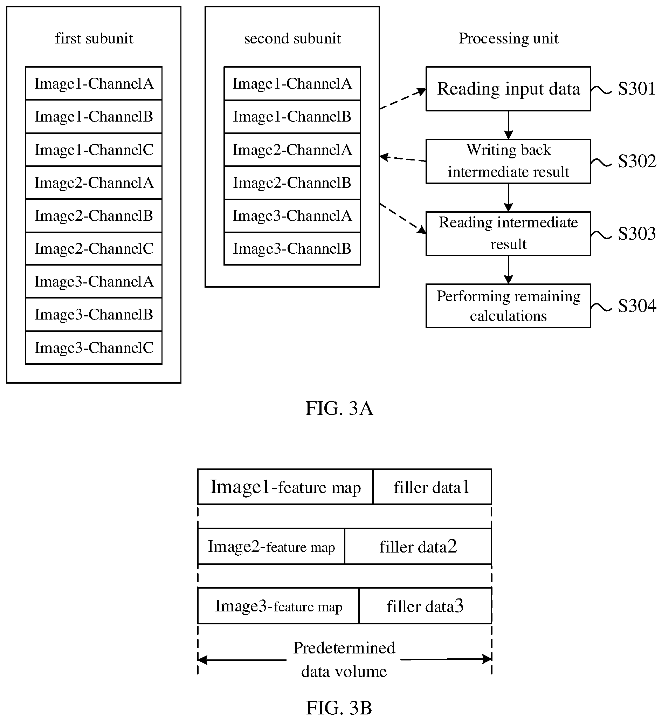

FIGS. 3A-FIG. 3B illustrate a schematic diagram of an image processing process according to exemplary embodiments of the present disclosure.

In this example, the image processing method 200 may be applied to an inference or training process of an image processing model.

In some examples, the inference or training process of the image processing model may be represented as a directed acyclic computation graph consists of multiple types of operators. The multiple types of operators may comprise convolution operators, batch normalization operators, vector addition operators, activation operators, find maximum operators, pooling operators, and the like.

In some examples, a sequence in the computational graph that is formed by concatenating a batch normalization operator, a vector addition operator, an activation operator, and a find-maximum operator has a higher occurrence frequency. Constructing, based on the sequence formed by concatenating the above four operators, a fusion operator can reduce the data read and write operations between the operators and improve the execution efficiency of the computational graph.

In some examples, the fusion operator may be invoked, based on input task information in an inference or training process of the image processing model, to perform a computation. For example, when the input task information indicates that the computation needs to be performed based on the sequence formed by concatenating the batch normalization operator, the vector addition operator, the activation operator, and the find-maximum operator, the four aforementioned operators included in the fusion operator are sequentially invoked. When the input task information indicates that the computation needs to be performed based only on the batch normalization operator and the activation operator, only the batch normalization operator and the activation operator in the fusion operator are sequentially invoked.

In some examples, the processing unit for performing the computational process of image processing may comprise a cache, that is, corresponding to the second memory that directly interacts with the processing unit as described above. Further, the first memory may be a multi-level storage system comprising a first subunit and a second subunit, that is, corresponding to different levels of cache.

As shown in FIG. 3A, the input image data may be divided according to channel dimensions, and according to the size of the second subunit in the first memory, a plurality of sub-image data of the plurality of image channels are copied from the first subunit to the second subunit each time, such that the processing unit can read data from the second subunit and perform a preliminary calculation, and when it is determined that the intermediate result obtained by the preliminary calculation still needs to participate in further remaining calculations, the intermediate result can be written back to the second subunit, and then the intermediate result can be read directly from the second subunit and the remaining calculations can be performed without having to perform the data transfer from the first subunit to the second subunit, thereby improving the image processing efficiency.

As shown in FIG. 3B, after extracting the feature data of the plurality of images using the processing unit, it is possible to achieve the length alignment of the feature data by splicing the first feature data of each image with its corresponding filler data, that is, to obtain the second feature data having a uniform predetermined data volume.

In some examples, the first feature data may be an activation function feature map output by the activation operator. Further, in one example, the first feature data may be further compressed to convert the activation function whole map into a bitmap to reduce the data volume and improve the image processing efficiency.

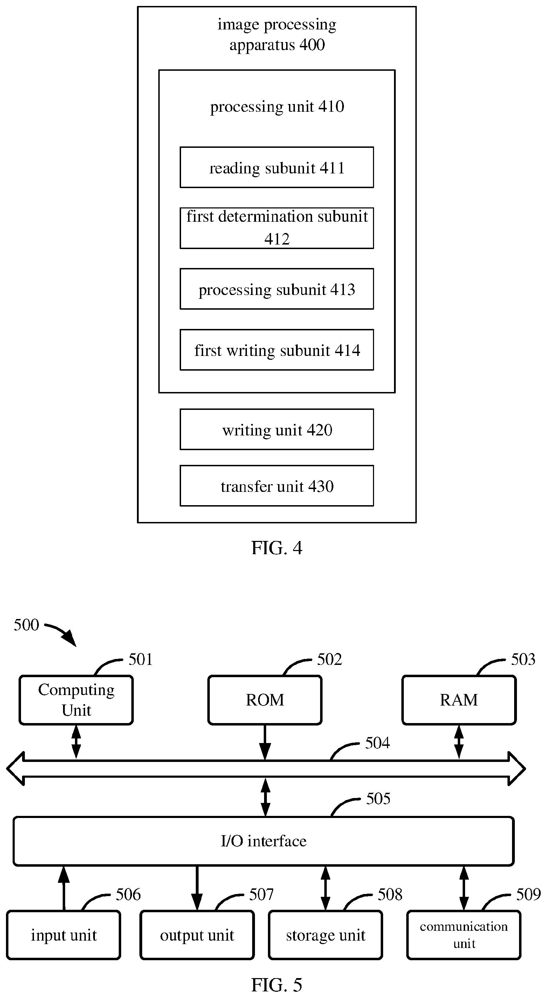

According to one aspect of the present disclosure, there is provided an image processing apparatus. FIG. 4 illustrates a structural block diagram of an image processing apparatus 400 according to exemplary embodiments of the present disclosure. As shown in FIG. 4, the apparatus 400 comprises:
a processing unit 410;
a writing unit 420, configured to read a plurality of images arranged in a predetermined order from a first memory, and write them to a second memory capable of being read and written by the processing unit,
wherein the processing unit 410 comprises:
   a reading subunit 411, configured to read the plurality of images from the second memory;
   a first determination subunit 412, configured to determine a plurality of first feature data corresponding to the plurality of images respectively;
   a processing subunit 413, configured to perform, for each of the plurality of first feature data, a first processing to obtain second feature data having a predetermined data volume, and the first processing comprises: determining, based on the data volume of the first feature data and the predetermined data volume, a first quantity to obtain filler data consisting of the first quantity of filler elements; and splicing the first feature data and the filler data to obtain the second feature data;
   a first writing subunit 414, configured to sequentially write, in the predetermined order, the plurality of second feature data respectively corresponding to the plurality of first feature data to the second memory; and
   a transfer unit 430, configured to transfer the second feature data stored in the second memory to the first memory in response to determining that the data volume of the second feature data stored in the second memory reaches a predetermined threshold.

According to some embodiments, each element in the first feature data is in a first data format, the filler element is in a second data format, the bit width of the second data format is less than the bit width of the first data format, and wherein the first processing for each first feature data further comprises: for each element in the first feature data, converting the element into a converted element with the second data format to obtain third feature data, wherein the splicing the first feature data and the filler data to obtain the second feature data comprises: splicing the third feature data and the filler data to obtain the second feature data.

According to some embodiments, the first memory comprises a first subunit and a second subunit, the first subunit stores the plurality of images, the writing unit 420 comprises: a second determination subunit, configured to determine a plurality of sub-image data based on the plurality of images, and the plurality of sub-image data comprises first sub-image data and second sub-image data; a second writing subunit, configured to write the first sub-image data to the second subunit to enable the first sub-image data to be read from the second subunit, the second writing subunit is further configured to write the second sub-image data to the second subunit in response to determining that the first sub-image data has been read, and wherein the transfer unit 430 is configured to: transfer the second feature data stored in the second memory to the second subunit in response to determining that the data volume of the second feature data stored in the second memory has reached a predetermined threshold, and in response to determining that the second processing is to be performed based on the second feature data stored in the second memory.

According to some embodiments, the transfer unit 430 is configured to: transfer the second feature data stored in the second memory to the target storage location in response to determining that a target storage location exists in the second subunit, wherein the target storage location does not include sub-image data that has not been read.

According to some embodiments, each of the plurality of images comprises a first image channel and a second image channel, and each of the plurality of feature data comprises first sub-feature data corresponding to the first image channel and second sub-feature data corresponding to the second image channel, and wherein the second determination subunit is configured to: determine the first sub-feature data based on the first image channel of each of the plurality of images; and determine the second sub-feature data based on the second image channel of each of the plurality of images.

According to some embodiments, the apparatus 400 further comprises: a determination unit, configured to determine the target feature data from the plurality of second feature data based on the predetermined data volume in response to determining that a second processing is to be performed for the target feature data of the plurality of second feature data, and wherein the processing unit 410 is configured to perform the second processing based on the target feature data.

It should be understood that the operations of the units of the image processing apparatus 400 shown in FIG. 4 may correspond to the steps in the image processing method 200 described in FIG. 2. Thus, the operations, features, and advantages described above with respect to method 200 are equally applicable to apparatus 400 and various units included therein. For the sake of brevity, certain operations, features, and advantages will not be repeated here

According to one aspect of the present disclosure, there is further included a chip, comprising an image processing device 400 as described above.

According to one aspect of the present disclosure, there is provided an electronic device, comprising: at least one processor; and a memory communicatively connected to the at least one processor; wherein the memory stores instructions executable by the at least one processor, and the instructions are executed by the at least one processor to enable the at least one processor to perform the above image processing method.

According to one aspect of the present disclosure, there is provided a non-transient computer-readable storage medium storing computer instructions, wherein the computer instructions are used to enable the computer to perform the above image processing method.

According to one aspect of the present disclosure, there is provided a computer program product, including an computer program, wherein the computer program implements the above image processing method when executed by a processor.

Referring to FIG. 5, a structural block diagram of an electronic device 500 that may be a server or client of the present disclosure is now described, which is an example of a hardware device that may be applicable to aspects of the present disclosure. Electronic devices are intended to represent various forms of digital electronic computer devices, such as laptop computers, desktop computers, workstations, personal digital assistants, servers, blade servers, mainframe computers, and other suitable computers. The electronic devices may also represent various forms of mobile devices, such as personal digital processing, cellular telephones, smart phones, wearable devices, and other similar computing devices. The components shown herein, their connections and relationships, and their functions are merely as examples, and are not intended to limit the implementations of the disclosure described and/or claimed herein.

As shown in FIG. 5, the electronic device 500 includes a computing unit 501, which may perform various appropriate actions and processing according to a computer program stored in a read-only memory (ROM) 502 or a computer program loaded into a random access memory (RAM) 503 from a storage unit 508. In the RAM 503, various programs and data required by the operation of the electronic device 500 may also be stored. The computing unit 501, the ROM 502, and the RAM 503 are connected to each other through a bus 504. Input/output (I/O) interface 505 is also connected to the bus 504.

A plurality of components in the electronic device 500 are connected to a I/O interface 505, including: an input unit 506, an output unit 507, a storage unit 508, and a communication unit 509. The input unit 506 may be any type of device capable of inputting information to the electronic device 500, the input unit 506 may receive input digital or character information and generate a key signal input related to user setting and/or function control of the electronic device, and may include, but is not limited to, a mouse, a keyboard, a touch screen, a track pad, a trackball, a joystick, a microphone, and/or a remote control. The output unit 507 may be any type of device capable of presenting information, and may include, but are not limited to, a display, a speaker, a video/audio output terminal, a vibrator, and/or a printer. The storage unit 508 may include, but is not limited to, a magnetic disk and an optical disk. The communication unit 509 allows the electronic device 500 to exchange information/data with other devices over a computer network, such as the Internet, and/or various telecommunication networks, and may include, but is not limited to, a modem, a network card, an infrared communication device, a wireless communication transceiver and/or a chipset, such as a Bluetooth device, a 802.11 device, a WiFi device, a WiMAX device, a cellular communication device, and/or the like.

The computing unit 501 may be a variety of general and/or special purpose processing components with processing and computing capabilities. Some examples of the computing unit 501 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, etc. The computing unit 501 performs the various methods and processes described above, for example, the image process method. For example, in some embodiments, the image process method may be implemented as a computer software program tangibly contained in a machine-readable medium, such as the storage unit 508. In some embodiments, part or all of the computer program may be loaded and/or installed onto the electronic device 500 via the ROM 502 and/or the communication unit 509. When the computer program is loaded to the RAM 503 and executed by the computing unit 501, one or more steps of the image process method described above may be performed. Alternatively, in other embodiments, the computing unit 501 may be configured to perform the image process method by any other suitable means (e.g., with the aid of firmware).

Various embodiments of the systems and techniques described above herein may be implemented in a digital electronic circuit system, an integrated circuit system, a field programmable gate array (FPGA), an application specific integrated circuit (ASIC), a dedicated standard product (ASSP), a system of system on a chip system (SoC), a complex programmable logic device (CPLD), computer hardware, firmware, software, and/or combinations thereof. These various embodiments may include: implementation in one or more computer programs that may be executed and/or interpreted on a programmable system including at least one programmable processor, where the programmable processor may be a dedicated or universal programmable processor that may receive data and instructions from a storage system, at least one input device, and at least one output device, and transmit data and instructions to the storage system, the at least one input device, and the at least one output device.

The program code for implementing the method of the present disclosure may be written in any combination of one or more programming languages. These program code may be provided to a processor or controller of a general-purpose computer, a special purpose computer, or other programmable data processing device such that the program code, when executed by the processor or controller, causes the functions/operations specified in the flowchart and/or block diagram to be implemented. The program code may be executed entirely on the machine, partly on the machine, partly on the machine as a stand-alone software package and partly on the remote machine or entirely on the remote machine or server.

In the context of the present disclosure, a machine-readable medium may be a tangible medium, which may contain or store a program for use by or in conjunction with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of a machine-readable storage media may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

To provide interaction with a user, the systems and techniques described herein may be implemented on a computer having: a display device (e.g., a CRT (cathode ray tube) or an LCD (liquid crystal display) monitor) for displaying information to a user; and a keyboard and pointing device (e.g., a mouse or trackball) by which a user may provide input to the computer. Other types of devices may also be used to provide interaction with a user; for example, the feedback provided to the user may be any form of perception feedback (e.g., visual feedback, auditory feedback, or tactile feedback); and the input from the user may be received in any form, including acoustic input, voice input, or haptic input.

The systems and techniques described herein may be implemented in a computing system including a back-end component(e.g., as a data server), or a computing system including a middleware component (e.g., an application server), or a computing system including a front-end component (e.g., a user computer with a graphic user interface or a web browser, the user may interact with implementations of the systems and techniques described herein through the graphic user interface or the web browser), or in a computing system including any combination of such back-end components, middleware components, or front-end components. The components of the system may be interconnected by digital data communication (e.g., a communications network) in any form or medium. Examples of communication networks include a local area network (LAN), a wide area network (WAN), the Internet, and a blockchain network.

The computer system may include a client and a server. Clients and servers are generally remote from each other and typically interact through a communication network. The relationship between clients and servers is generated by computer programs running on respective computers and having a client-server relationship to each other. The server may be a cloud server, or may be a server of a distributed system, or a server incorporating a block chain.

It should be understood that the various forms of processes shown above may be used, and the steps may be reordered, added, or deleted. For example, the steps described in the present disclosure may be performed in parallel or sequentially or in a different order, as long as the results expected by the technical solutions disclosed in the present disclosure can be achieved, and no limitation is made herein.

Although embodiments or examples of the present disclosure have been described with reference to the accompanying drawings, it should be understood that the foregoing methods, systems, and devices are merely embodiments or examples, and the scope of the present disclosure is not limited by these embodiments or examples, but is only defined by the authorized claims and their equivalents. Various elements in the embodiments or examples may be omitted or may be replaced by equivalent elements thereof. Further, the steps may be performed in an order different from that described in the present disclosure. Further, various elements in the embodiments or examples may be combined in various ways. Importantly, with the evolution of the technology, many elements described herein may be replaced by equivalent elements appearing after the present disclosure.

## Claims

1. An image processing method performed by an image processing apparatus, the image processing apparatus comprises a processing unit, the method comprises:
reading a plurality of images arranged in a predetermined order from a first memory, and writing them to a second memory capable of being read and written by the processing unit;
reading the plurality of images from the second memory using the processing unit;
determining a plurality of first feature data corresponding to the plurality of images, respectively;
performing, for each of the plurality of first feature data, a first processing to obtain second feature data having a predetermined data volume, and the first processing comprises:
determining, based on the data volume of the first feature data and the predetermined data volume, a first quantity to obtain filler data consisting of the first quantity of filler elements; and
splicing the first feature data and the filler data to obtain the second feature data;
sequentially writing, in the predetermined order, the plurality of second feature data corresponding to the plurality of first feature data to the second memory; and
transferring the second feature data stored in the second memory to the first memory in response to determining that the data volume of the second feature data stored in the second memory reaches a predetermined threshold.

2. The method according to claim1, wherein, each element in the first feature data is in a first data format, the filler element is in a second data format, the bit width of the second data format is less than the bit width of the first data format, and wherein, the first processing for each first feature data further comprises:
for each element in the first feature data, converting the element into a converted element with the second data format to obtain third feature data,
wherein the splicing the first feature data and the filler data to obtain the second feature data comprises:
splicing the third feature data and the filler data to obtain the second feature data.

3. The method according to claim 1 or 2, wherein, the first memory comprises a first subunit and a second subunit, the first subunit stores the plurality of images, and the reading the plurality of images arranged in the predetermined order from the first memory to write them to the second memory comprises:
determining a plurality of sub-image data based on the plurality of images, the plurality of sub-image data comprises first sub-image data and second sub-image data;
writing the first sub-image data to the second subunit to enable the first sub-image data to be read from the second subunit; and
writing the second sub-image data to the second subunit in response to determining that the first sub-image data has been read,
and wherein, the transferring the second feature data stored in the second memory to the first memory in response to determining that the data volume of the second feature data stored in the second memory has reached a predetermined threshold comprises:
transferring the second feature data stored in the second memory to the second subunit in response to determining that the data volume of the second feature data stored in the second memory has reached the predetermined threshold and in response to determining that the second processing is to be performed based on the second feature data stored in the second memory.

4. The method according to claim 3, wherein, the transferring the second feature data stored in the second memory to the second subunit comprises:
transferring the second feature data stored in the second memory to the target storage location in response to determining that a target storage location exists in the second subunit, wherein the target storage location does not comprise the sub-image data that has not been read.

5. The method according to claim 3 or 4, wherein, each of the plurality of images comprises a first image channel and a second image channel, and each of the plurality of feature data comprises first sub-feature data corresponding to the first image channel and second sub-feature data corresponding to the second image channel,
and wherein the determining the plurality of sub-image data based on the plurality of images comprises:
determining the first sub-image data based on the first image channel of each of the plurality of images; and
determining the second sub-image data based on the second image channel of each of the plurality of images.

6. The method according to any one of claims 1-5, further comprising:
determining, based on the predetermined data volume, the target feature data from the plurality of second feature data in response to determining that a second processing is to be performed for the target feature data of the plurality of second feature data; and
performing the second processing based on the target feature data.

7. An image processing apparatus, comprising:
a processing unit;
a writing unit, configured to read a plurality of images arranged in a predetermined order from a first memory, and write them to a second memory capable of being read and written by the processing unit,
wherein the processing unit comprises:
a reading subunit, configured to read the plurality of images from the second memory;
a first determination subunit, configured to determine a plurality of first feature data corresponding to the plurality of images respectively;
a processing subunit, configured to perform, for each of the plurality of first feature data, a first processing to obtain second feature data having a predetermined data volume,
and the first processing comprises:
determining, based on the data volume of the first feature data and the predetermined data volume, a first quantity to obtain filler data consisting of the first quantity of filler elements; and
splicing the first feature data and the filler data to obtain the second feature data;
a first writing subunit, configured to sequentially write, in the predetermined order, the plurality of second feature data respectively corresponding to the plurality of first feature data to the second memory; and
a transfer unit, configured to transfer the second feature data stored in the second memory to the first memory in response to determining that the data volume of the second feature data stored in the second memory reaches a predetermined threshold.

8. The apparatus according to claim 7, wherein, each element in the first feature data is in a first data format, the filler element is in a second data format, the bit width of the second data format is less than the bit width of the first data format, and wherein, the first processing for each first feature data further comprises:
converting, for each element in the first feature data, the element into a converted element with the second data format to obtain third feature data,
wherein the splicing the first feature data and the filler data to obtain the second feature data comprises:
splicing the third feature data and the filler data to obtain the second feature data.

9. The apparatus according to claim 7 or 8, wherein, the first memory comprises a first subunit and a second subunit, the first subunit stores the plurality of images, and the writing unit comprises:
a second determination subunit, configured to determine a plurality of sub-image data based on the plurality of images, and the plurality of sub-image data comprises a first sub-image data and a second sub-image data;
a second writing subunit, configured to write the first sub-image data to the second subunit to enable the first sub-image data to be read from the second subunit,
and the second writing subunit is further configured to write the second sub-image data to the second subunit in response to determining that the first sub-image data has been read,
and wherein the transfer unit is configured to:
transfer the second feature data stored in the second memory to the second subunit in response to determining that the data volume of the second feature data stored in the second memory has reached the predetermined threshold and in response to determining that the second processing is to be performed based on the second feature data stored in the second memory.

10. The apparatus according to claim 9, wherein, the transfer unit is configured to:
transfer the second feature data stored in the second memory to the target storage location in response to determining that a target storage location exists in the second subunit, wherein the target storage location does not comprise the sub-image data that has not been read.

11. The apparatus according to claim 9 or 10, wherein, each of the plurality of images comprises a first image channel and a second image channel, and each of the plurality of feature data comprises first sub-feature data corresponding to the first image channel and second sub-feature data corresponding to the second image channel,
and wherein the second determination subunit is configured to:
determine the first sub-image data based on the first image channel of each of the plurality of images; and
determine the second sub-image data based on the second image channel of each of the plurality of images.

12. The apparatus according to any one of claims 7-11, further comprising:
a determination unit, configured to determine, based on the predetermined data volume, the target feature data from the plurality of second feature data in response to determining that a second processing is to be performed for the target feature data of the plurality of second feature data,
and wherein the processing unit is configured to perform the second processing based on the target feature data.

13. A chip, comprising the image processing apparatus of any one of claims 7-12.

14. An electronic device, comprising:
at least one processor; and
a memory communicatively connected to the at least one processor; wherein
the memory stores instructions executable by the at least one processor, and the instructions are executed by the at least one processor to enable the at least one processor to perform the method of any one of claims 1-6.

15. A non-transient computer-readable storage medium storing computer instructions, wherein the computer instructions are used to enable the computer to perform the method according to any one of claims 1-6.

16. A computer program product, including a computer program, wherein the computer program implements, when executed by a processor, the method according to any one of claims 1-6.
